# EUROPÄISCHE PATENTANMELDUNG

(11) **EP 2 251 755 A2**
(43) Veröffentlichungstag der Anmeldung: **17.11.2010**
(21) Anmeldenummer: 10161447.7
(22) Anmeldetag: 29.04.2010
(51) Int. Cl.: G05B 19/418

(54) **Verfahren zum Betrieb einer automatisierten Anlage zur industriellen Prozess- und/oder Fertigungsautomatisierung**

(30) Priorität: 12.05.2009 DE 102009020917
(71) Anmelder: SIEMENS AKTIENGESELLSCHAFT, 80333 München (DE)
(72) Erfinder: Gerdes, Christoph, 81667 München (DE); Kleegrewe, Christian, 85386 Eching (DE); Merk, Stephan, 80804 München (DE)

(57) **Zusammenfassung**

Die Erfindung betrifft ein Verfahren zum Betrieb einer automatisierten Anlage zur industriellen Prozess- und/oder Fertigungsautomatisierung, umfassend eine Vielzahl von Steuereinheiten (C, C1 ..., C6), welche mit einer Vielzahl von Sensoren (S) und Aktoren (A) wechselwirken. Durch die Steuereinheiten (C, C1, ..., C6) werden Applikationen (AP1, AP2, AP3) umfassend Steuerungsapplikationen zur Steuerung des Anlage durchgeführt, wobei eine oder mehrere der Applikationen (AP1, AP2, AP3) basierend auf einem verteilten Rechenverfahren ausgeführt werden, bei dem Rechenprozesse des oder der Applikationen (AP1, AP2, AP3) auf mehrere Steuereinheiten (C, C1, ..., C6) verteilt werden.

## Beschreibung

Die Erfindung betrifft ein Verfahren zum Betrieb einer automatisierten Anlage zur industriellen Prozess- und/oder Fertigungsautomatisierung sowie eine entsprechende automatisierte Anlage.

Zur industriellen Herstellung von Gütern sind automatisierte Anlagen bzw. Automatisierungssysteme bekannt, welche mit automatisiert arbeitenden Sensoren und Aktoren Güter bzw. Produkte herstellen. Es wird dabei zwischen Fertigungsautomatisierung und Prozessautomatisierung unterschieden, wobei im Rahmen der Fertigungsautomatisierung Güter maschinell gefertigt werden, beispielsweise an einer Vielzahl von Stationen durch geeignete Aktoren in der Form von Robotern. Ein Beispiel der Fertigungsautomatisierung ist die Herstellung von Automobilen entlang einer Fertigungsstraße. Demgegenüber beschreibt die Prozessautomatisierung die automatisierte Durchführung von Prozessschritten bei der verfahrenstechnischen (z. chemischen) Herstellung von Produkten, wobei im Rahmen der Prozessautomatisierung insbesondere Materialflüsse und Vorgänge zum Mischen von Substanzen gesteuert werden. Die Prozessschritte werden dabei über geeignete Sensoren überwacht, und über Aktoren werden Aktionen im Rahmen der Prozesse ausgelöst.

Die industrielle Prozess- bzw. Fertigungsautomatisierung kann heutzutage abstrakt anhand der sog. Automatisierungspyramide beschrieben werden. Die beiden untersten Ebenen der Pyramide beschreiben dabei die Prozess- bzw. Feldebene, welche die Ausführung der einzelnen Fertigungs- bzw. Prozessschritte unter Verwendung entsprechender Sensoren und Aktoren repräsentiert. Oberhalb dieser Ebenen liegt die sog. Kontroll- oder Steuerungsebene, welche durch Steuereinheiten bzw. Steuergeräte realisiert wird, insbesondere durch speicherprogrammierte Steuerungen (englisch: PLC = Programable Logic Controller). Über der Kontrollebene liegt die sog. Leitebene, über welche die Fertigungsschritte bzw. Prozesse geeignet bedient bzw. überwacht werden. Oberhalb dieser Leitebene liegt die sog. MES-Ebene (MES = Manufacturing Execution System), über welche die Produktionsfeinplanung, Produktionsdatenerfassung sowie weitere Funktionalitäten, wie Qualitätssicherung, realisiert werden. Darauf aufgesetzt ist schließlich noch die ERP-Ebene (ERP = Enterprise Ressource Planning), welche die Produktionsgrobplanung bzw. Bestellabwicklung innerhalb eines Unternehmens für den Betrieb der zu Grunde liegenden automatisierten Anlage beschreibt.

Wie oben erwähnt, werden auf der Kontrollebene der Automatisierungspyramide eine Vielzahl von Steuereinheiten verwendet, welche bestimmte Funktionen in der automatisierten Anlage realisieren bzw. gegebenenfalls übergeordnete Funktionalitäten zwischen verschiedenen Einheiten der Anlage implementieren. Dabei besteht das Problem, dass die durch die Steuereinheiten bereitgestellten Ressourcen (d.h. die Rechen- und Speicherkapazität der verwendeten Controller) oftmals nicht optimal genutzt werden, so dass bei Betrieb der automatisierten Anlage Ressourcen ungenutzt brach liegen.

Aufgabe der Erfindung ist es deshalb, ein Verfahren zum Betrieb einer automatisierten Anlage zu schaffen, bei dem die Ressourcen der Steuereinheiten der Anlage besser ausgenutzt werden.

Diese Aufgabe wird durch das Verfahren gemäß Patentanspruch 1 bzw. die automatisierte Anlage gemäß Patentanspruch 14 gelöst. Weiterbildungen der Erfindung sind in den abhängigen Ansprüchen definiert.

Das erfindungsgemäße Verfahren dient zum Betrieb einer automatisierten Anlage, welche eine Vielzahl von Steuereinheiten umfasst, welche mit einer Vielzahl von Sensoren und Aktoren wechselwirken, um auf diese Weise eine geeignete Steuerung des Prozesses (bzw. der Fertigung) zu erreichen, welche durch die automatisierte Anlage durchgeführt wird. Dabei werden durch die Steuereinheiten Applikationen umfassend Steuerungsapplikationen zur Steuerung der Anlage durchgeführt, wobei eine oder mehrere der Applikationen basierend auf einem verteilten Rechenverfahren ausgeführt werden, bei dem Rechenprozesse des oder der Applikationen auf mehrere Steuereinheiten verteilt werden.

Das erfindungsgemäße Verfahren beruht auf der Idee, ein an sich bekanntes Konzept eines verteilten Rechenverfahrens, wonach Rechenprozesse unter Nutzung der Ressourcen von mehreren Rechnern durchgeführt werden, im Bereich der industriellen Automatisierung zu implementieren. In einer besonders bevorzugten Variante wird dabei als verteiltes Rechenverfahren das hinlänglich aus dem Stand der Technik bekannte Grid-Computing eingesetzt, mit dem aus einer Vielzahl von Rechnerressourcen eine rechnerübergreifende (virtuelle) Ressource gebildet wird, auf die im Rahmen des Grid-Computing zugegriffen wird. Beim Grid-Computing entsteht durch eine lose Kopplung einer Vielzahl von einzelnen Rechnern ein virtueller Supercomputer. Dadurch können brach liegende Rechenkapazitäten ohne den Einsatz spezieller Hardware effizient genutzt werden. Wie bereits erwähnt, sind entsprechende Verfahren zum Grid-Computing hinlänglich aus dem Stand der Technik bekannt. Beispielhaft wird auf die Druckschriften [1] und [2] verwiesen. Der gesamte Offenbarungsgehalt dieser Druckschriften wird durch Verweis zum Inhalt der vorliegenden Anmeldung gemacht. In einer besonders bevorzugten Ausführungsform wird dabei eine sog. UNICORE-Grid-Infrastruktur zwischen den Steuereinheiten der automatisierten Anlage realisiert, wobei diese Infrastruktur in der genannten Druckschrift [2] beschrieben ist. Das Grid-Computing kann erfindungsgemäß in einfacher Weise durch die Hinterlegung entsprechender Grid-Computing-Software auf den einzelnen Steuereinheiten realisiert werden.

In einer besonders bevorzugten Ausführungsform wird mit dem erfindungsgemäßen Verfahren eine automatisierte Anlage umfassend miteinander wechselwirkende Automatisierungsmodule betrieben, wobei in jedem Automatisierungsmodul ein oder mehrere Sensoren und/oder Aktoren und eine Steuereinheit enthalten sind. Der Aufbau einer automatisierten Anlage basierend auf Automatisierungsmodulen ist aus dem Stand der Technik bekannt. Die automatisierte Anlage setzt sich dabei aus einer Vielzahl von vordefinierten Automatisierungsmodulen zusammen, welche bestimmte vorkonfigurierte Funktionen in der Anlage übernehmen. Das Engineering (d.h. der Prozess des Entwurfs und Realisierung der Anlage) wird durch solche Automatisierungsmodule stark vereinfacht, da die Automatisierungsmodule selbst nicht mehr entworfen werden müssen, sondern lediglich die Wechselwirkung zwischen den Modulen. Es erweist sich dabei als nachteilhaft, dass die Steuereinheiten in den einzelnen Automatisierungsmodulen im Betrieb einer solchen modular aufgebauten Anlage oft nicht ausreichend ausgelastet werden. Demzufolge weist das erfindungsgemäße Verfahren bei einer modular aufgebauten automatisierten Anlage besondere Vorteile auf, da durch die Verwendung eines verteilten Rechenverfahrens die Ressourcen der Steuereinheiten der einzelnen Automatisierungsmodule wesentlich besser genutzt werden können.

In einer besonders bevorzugten Ausführungsform umfassen das oder die Applikationen, die basierend auf dem verteilten Rechenverfahren ausgeführt werden, eine oder mehrere übergeordnete, zwischen den Automatisierungsmodulen durchgeführte Steuerungsapplikationen. Auf diese Weise kann gegebenenfalls auf die Verwendung von weiteren, lediglich für übergeordnete bzw. modulübergreifende Steuerungsfunktionalitäten vorgesehene Steuereinheiten zumindest zum Teil verzichtet werden, da diese Funktionalitäten ganz oder teilweise durch die Steuereinheiten der Automatisierungsmodule übernommen werden können.

In einer weiteren Variante des erfindungsgemäßen Verfahrens umfassen das oder die Applikationen, die basierend auf dem verteilten Rechenverfahren ausgeführt werden, eine oder mehrere, in der Automatisierungspyramide oberhalb der Steuerungsebene liegende Applikationen, insbesondere eine oder mehrere MES-Applikationen. Der Aufbau der Automatisierungspyramide wurde weiter oben dargelegt und ist an sich aus dem Stand der Technik bekannt. Mit dieser Variante der Erfindung können somit auch Funktionalitäten in der Anlage realisiert werden, welche nicht ausschließlich die Steuerung der Anlage betreffen. Gegebenenfalls ist es dabei auch möglich, dass externe, nicht mit der automatisierten Anlage im Zusammenhang stehende Applikationen durch ansonsten brach liegende Ressourcen entsprechender Steuereinheiten der Anlage mit Hilfe des verteilten Rechenverfahrens ausgeführt werden.

In einer weiteren, besonders bevorzugten Ausführungsform des erfindungsgemäßen Verfahrens sind in der automatisierten Anlage Regeln hinterlegt, mit denen gemäß dem verteilten Rechenverfahren die Ausführung des oder der Applikationen auf die Steuereinheiten verteilt werden. Die Verwendung solcher Regeln (englisch: Policy) bei der verteilten Ausführung von Rechenprozessen ist dabei an sich aus dem Stand der Technik bekannt. Je nach Anwendungsfall können die Regeln geeignet definiert bzw. auch gegebenenfalls geändert werden. Vorzugsweise sind die Regeln dabei derart ausgestaltet, dass die Rechenprozesse der Applikationen möglichst gleichmäßig auf die Ressourcen der Steuereinheiten verteilt werden.

In einer weiteren, besonders bevorzugten Ausführungsform des erfindungsgemäßen Verfahrens wird zwischen den Steuereinheiten der automatisierten Anlage ein dezentrales logisches Datennetz aufgebaut, welches als Netzknoten zumindest die Steuereinheiten umfasst und in welchem die in der automatisierten Anlage verarbeiteten Daten in einem logischen Datenraum über logische Adressen verwaltet werden. Die Verwendung von logischen dezentralen Datennetzen ist dabei hinlänglich aus dem Stand der Technik bekannt und wird nunmehr im Bereich der industriellen Automatisierung dazu eingesetzt, dass ein für alle Steuereinheiten gemeinsamer logischer Datenraum geschaffen wird. Dabei können aus dezentralen Datennetzen bekannte Mechanismen, insbesondere eine redundante Speicherung von Daten auf mehreren Netzknoten, in dem erfindungsgemäßen Verfahren implementiert werden. Hierdurch wird die automatisierte Anlage robust gegenüber Ausfällen von Netzknoten bzw. Datenverlusten. In einer besonders bevorzugten Ausführungsform wird als dezentrales Datennetz ein Peer-to-Peer-Netz eingesetzt, insbesondere ein auf einer verteilten Hash-Tabelle basierendes Peer-to-Peer-Netz, beispielsweise unter Verwendung bekannter Protokolle wie Chord, Pastry, CAN, Kademlia und dergleichen.

Der zwischen den Steuereinheiten implementierte logische Datenraum wird in einer besonders bevorzugten Ausführungsform dazu verwendet, um eine oder mehrere der in der automatisierten Anlage ausgeführten Applikationen, insbesondere eine oder mehrere Applikationen, welche basierend auf dem verteilten Rechenverfahren ausgeführt werden, in diesem Datenraum unter Verwendung der logischen Adressen durchzuführen. In einer Variante des erfindungsgemäßen Verfahrens können das oder die Applikationen zumindest teilweise einen Publish-Subscribe-Mechanismus zum Zugriff auf Daten in dem logischen Datenraum verwenden.

In einer weiteren, bevorzugten Ausführungsform des erfindungsgemäßen Verfahrens umfassen die Netzknoten des dezentralen Datennetzes neben den Steuereinheiten ferner eine oder mehrere Sensoren und/oder Aktoren und/oder weitere Komponenten der automatisierten Anlage, insbesondere einen oder mehrere Rechner einer Leitstelle der automatisierten Anlage. Gegebenenfalls besteht auch die Möglichkeit, dass die Daten der Sensoren bzw. Aktoren im logischen Datenraum über Steuereinheiten verarbeitet werden, welche den entsprechenden Sensoren bzw. Aktoren zugeordnet sind, so dass nicht separat ein Netzknoten für die einzelnen Sensoren bzw. Aktoren gebildet werden muss. Durch die Hinzunahme von weiteren Komponenten (neben den Steuereinheiten und gegebenenfalls den Sensoren bzw. Aktoren) zu dem dezentralen Datennetz können weitergehende Funktionalitäten in der Anlage realisiert werden.

In einer weiteren Ausführungsform des erfindungsgemäßen Verfahrens werden in dem dezentralen Datennetz die logischen Adressen in physikalische Adressen (z.B. MAC- oder IP-Adressen) aufgelöst, wobei von einer oder mehreren der Applikationen, insbesondere von einer oder mehreren Applikationen, welche basierend auf dem verteilten Rechenverfahren ausgeführt werden, die physikalischen Adressen bei deren Ausführung verwendet werden. Auf diese Weise kann direkt auf physikalische Adressen zurückgegriffen werden, wodurch eine schnelle Ausführung der entsprechenden Applikation im Wesentlichen in Echtzeit sichergestellt wird.

In einer weiteren Ausführungsform des erfindungsgemäßen Verfahrens werden die Funktionalitäten der Steuereinheiten und/oder Sensoren und/oder Aktoren in der automatisierten Anlage zumindest teilweise als Dienste mit (standardisierten) Dienste-Schnittstellen bereitgestellt, wobei auf die Dienste im Rahmen des Betriebs der automatisierten Anlage durch eine oder mehrere der in der automatisierten Anlage ausgeführten Applikationen, insbesondere durch eine oder mehrere Applikationen, welche basierend auf dem verteilten Rechenverfahren ausgeführt werden, zugegriffen wird. Auf diese Weise wird ein Zugriff auf entsprechende Funktionen über einheitliche Schnittstellen gewährleistet. Das Konzept der Implementierung von Funktionalitäten in der Form von Diensten bzw. Services ist dabei hinlänglich aus dem Stand der Technik bekannt und wird nunmehr auch im Rahmen des Betriebs einer automatisierten Anlage eingesetzt. Beispielsweise können die Dienste in der Form von an sich bekannten Web-Service-Schnittstellen realisiert werden.

In einer weiteren Variante des erfindungsgemäßen Verfahrens werden mehrere Dienste zumindest teilweise zu übergeordneten Diensten gekapselt, wobei vorzugsweise auch übergeordnete Dienste zu weiteren übergeordneten Diensten gekapselt werden können. Hierdurch kann ein hierarchischer Aufbau der verwendeten Dienste und eine geeignete Kombination von mehreren Diensten zu zusammengefassten Diensten erreicht werden.

Neben dem oben beschriebenen Verfahren umfasst die Erfindung ferner eine automatisierte Anlage zur Prozess- und/oder Fertigungsautomatisierung mit einer Vielzahl von Steuereinheiten, welche mit einer Vielzahl von Sensoren und Aktoren wechselwirkt, wobei die Steuereinheiten derart ausgestaltet sind, dass sie im Betrieb der Anlage Applikationen umfassend Steuerungsapplikationen zur Steuerung der Anlage durchführen, wobei eine oder mehrere der Applikationen basierend auf einem verteilten Rechenverfahren ausgeführt werden, bei dem Rechenprozesse des oder der Applikationen auf mehrere Steuereinheiten verteilt werden. Die Anlage ist dabei vorzugsweise derart ausgestaltet, dass jede Variante des oben beschriebenen Verfahrens mit der Anlage durchführbar ist.

Ausführungsbeispiele der Erfindung werden nachfolgend anhand der beigefügten Figuren detailliert beschrieben.

Es zeigen:
- Fig. 1: eine schematische Darstellung der gemäß einer Aus- führungsform der Erfindung realisierten Mehr- schichtarchitektur einer automatisierten Anlage;
- Fig. 2: eine schematische Darstellung einer Ausführungsform einer erfindungsgemäßen automatisierten Anlage, in der eine Applikation innerhalb eines zwischen den Komponenten der Anlage ausgebildeten Peer-to-Peer- Netzes ausführt wird; und
- Fig. 3: eine schematische Darstellung von Komponenten einer erfindungsgemäßen Anlage, in der eine Applikation basierend auf Grid-Computing durchgeführt wird.

In den nachfolgend beschriebenen Ausführungsformen von automatisierten Anlagen zur Prozess- bzw. Fertigungsautomatisierung werden Konzepte des Grid-Computings und von Peer-to-Peer-Systemen auf die Domäne der industriellen Automatisierung angewandt. In einer besonders bevorzugten Ausführungsform werden diese Konzepte in einer modular aufgebauten automatisierten Anlage umgesetzt, bei der eine Vielzahl von einzelnen automatisierten Einheiten (im Folgenden auch als Automatisierungsmodule bezeichnet) Teilprozesse bzw. Fertigungsschritte durchführen, wobei sich eine automatisierte Einheit dadurch auszeichnet, dass sie eine eigene Steuereinheit umfasst, mit der Daten von Sensoren bzw. Aktoren verarbeitet werden und die Sensoren bzw. Aktoren über die Steuereinheit geeignet gesteuert werden. Die einzelnen Automatisierungsmodule stellen beispielsweise entsprechende Einheiten im Rahmen einer Prozessautomatisierung dar, z.B. einen Kessel, Mischer, Reaktoren inklusive Sensoren und Aktoren sowie deren Daten.

Die Sensor- und Aktordaten bezeichnen sowohl die aktuell gemessenen bzw. eingestellten Werte als auch Konfigurationsdaten.

Jede automatisierte Einheit stellt die entsprechend dem Teilprozess bzw. Fertigungsschritt auszuführenden Funktionen und Schnittstellen bereit, so dass während der Planung der Anlage auf die entsprechenden Schnittstellen bzw. Funktionen der Einheiten zurückgegriffen werden kann und diese nicht neu entworfen werden müssen. Es müssen lediglich die Einheiten untereinander bei der Planung und beim Aufbau der Anlage miteinander verbunden werden und Einheiten-übergreifende Funktionen in geeigneter Weise realisiert werden. Damit werden sowohl die initiale Planung und der Aufbau der Anlage (auch als Engineering bezeichnet) als auch die Umkonfiguration der Anlage (auch als Reengineering bezeichnet) vereinfacht und die Flexibilität erhöht. Eine modular aufgebaute automatisierte Anlage weist jedoch den Nachteil auf, dass sie wesentlich mehr Steuereinheiten als herkömmliche automatisierte Anlagen benötigt, da jedes einzelne Automatisierungsmodul mit einer Steuereinheit ausgestattet ist.

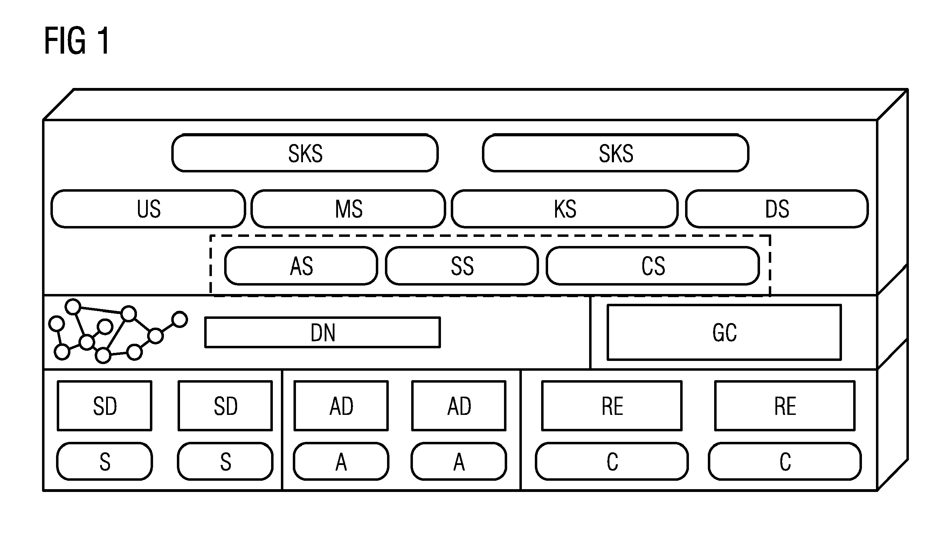

In Fig. 1 ist eine schematische Schichtstruktur angedeutet, wobei die unterste Schicht die in der oben beschriebenen modular aufgebauten automatisierten Anlage verwendeten Komponenten in der Form von Sensoren S, Aktoren A und Steuereinheiten C verdeutlicht, wobei eine Steuereinheit sowie eine Anzahl von Sensoren und Aktoren zu Automatisierungsmodulen zusammengefasst sind. Die einzelnen Sensoren und Aktoren stellen dabei Sensordaten SD bzw. Aktordaten AD bereit, welche intern in dem jeweiligen Automatisierungsmodul von der entsprechenden Steuereinheit C verarbeitet werden, welche basierend auf den Sensor- und/oder Aktordaten entsprechende Befehle ausgibt, um geeignete Aktionen durch die Aktoren auszulösen. Die einzelnen Steuereinheiten C enthalten dabei eine geeignete Recheneinheit, welche entsprechende Ressourcen RE in der Form von Speicher- und Rechen-Kapazität zur Verfügung stellen. Da in der modular aufgebauten Anlage für jedes Modul eine separate Steuereinheit verwendet wird, ist die Menge an bereitgestellten Ressourcen RE in der Regel wesentlich größer als die tatsächlich in der automatisierten Anlage zur Steuerung benötigte Ressourcenmenge.

In der hier beschriebenen Ausführungsform der Erfindung wird die überschüssige Ressourcenmenge nunmehr dazu genutzt, um modulübergreifende Kontrollfunktionen mit den freien Ressourcen der Steuereinheiten C durchzuführen, so dass auf separate Recheneinheiten zur Realisierung dieser modulübergreifenden Kontrollfunktionen verzichtet werden kann. Um dies zu erreichen, werden modulübergreifende Programme bzw. Applikationen basierend auf Grid-Computing GC durchgeführt, wobei Grid-Computing hinlänglich aus dem Stand der Technik bekannt ist. Zur Realisierung des Grid-Computing wird auf den einzelnen Steuereinheiten eine Grid-Computing-Software installiert, welche in geeigneter Weise die Rechenprozesse einer oder mehrerer Applikationen auf verschiedene Steuereinheiten mit freien Ressourcen verteilt. In einer besonders bevorzugten Ausführungsform wird eine Grid-Computing-Infrastruktur basierend auf UNICORE (Uniform Interface to Computer Ressources) realisiert (siehe Dokument [2]). Durch das Grid-Computing GC wird eine Ressourcen- und Laufzeitumgebungs-Virtualisierung erreicht, so dass virtuell auf eine einzelne Ressource zugegriffen wird, welche jedoch aus einer Vielzahl von Ressourcen unterschiedlicher Steuereinheiten besteht, auf welche mit der entsprechenden Grid-Computing-Software die durchgeführten Rechenprozesse verteilt werden.

In der hier beschriebenen Ausführungsform einer automatisierten Anlage wird das Grid-Computing in Kombination mit einem zwischen den Komponenten der Anlage aufgebauten dezentralen Datennetz DN verwendet, wobei das Datennetz ein hinlänglich aus dem Stand der Technik bekanntes logisches Peer-to-Peer-Netz ist. Die Peers in dem Netz umfassen zumindest die Steuereinheiten C der Anlage, wobei je nach Anwendungsfall gegebenenfalls auch die einzelnen Sensoren S und Aktoren A Peers sein können. In der hier beschriebenen Ausführungsform wird zwischen den Komponenten der Anlage ein Peer-to-Peer-Netz basierend auf einer verteilten Hash-Tabelle (englisch: DHT = Distributed Hash Table) verwendet, welches ein strukturiertes Overlay-Netz darstellt, bei dem die im Netz zu speichernden Informationen durch konsistentes Hashing mit Hilfe einer Hash-Funktion auf einen Hashwert aus einem normierten Wertebereich abgebildet wird. Jeder Peer in dem Netz ist dabei für ein Intervall aus dem Wertebereich zuständig, wodurch jeder Hashwert und damit jede Information genau einem Peer zugeordnet wird. Dieser Peer kann mit entsprechenden Verfahren mit einer parametrierbaren Anzahl von Schritten gefunden werden.

In dem Overlay-Netz werden virtuelle bzw. logische Adressen zum Verwalten von Daten verwendet, wobei auf diese Weise für alle am Peer-to-Peer-Netz beteiligten Komponenten der Anlage ein gemeinsamer logischer Datenraum geschaffen wird. In dem Peer-to-Peer-Netz werden dabei die einzelnen Peers nicht mehr mit ihren physikalischen Netzwerkadressen, z.B. IP- oder MAC-Adressen, sondern mit einem entsprechenden logischen Bezeichner adressiert, der in einem DHT-basierten Netz in der Regel den ersten Wert des Intervalls darstellt, für den der jeweilige Peer zuständig ist. In dem Peer-to-Peer-Netz werden die logischen Daten als Schlüssel-Werte-Paare unter einem frei wählbaren Schlüssel gespeichert. Im Allgemeinen folgt der Schlüssel bestimmten Namenskonventionen, um die Bedienbarkeit und Lesbarkeit durch einen menschlichen Operator zu erleichtern. Der Schlüssel kann sowohl den Typ und die Semantik der Datenquelle (z.B. Sensor) bzw. Datensenke (z.B. Aktor) als auch deren Funktion im System beschreiben (z.B. Drucksensor_T2181_PosXY_Reaktordruck). Auf diese Daten kann dann entweder direkt über den Schlüssel oder über einen Publish-Subscribe-Mechanismus zugegriffen werden, der weiter unten näher an einem Beispiel erläutert wird. Im letzteren Fall wird die subskribierende Komponente benachrichtigt, sobald sich das zum Schlüssel gehörige Datum ändert.

Neben dem Konzept der Datenvirtualisierung über ein Peer-to-Peer-Netz DN und einer Laufzeitvirtualisierung über Grid-Computing GC wird in der hier beschriebenen Ausführungsform das Konzept der Serviceorientierung eingesetzt, bei der durch die einzelnen Aktoren bzw. Sensoren bzw. Steuereinheiten durchführbare Aktionen zu Diensten bzw. Services zusammengefasst werden. Solche Dienste repräsentieren somit entsprechende Funktion, die von definierten Einheiten bereitgestellt werden. Die Verwendung von Diensten bzw. Dienst-orientierten Architekturen (englisch: SOA = Service Oriented Architecture) ist dabei hinlänglich aus dem Stand der Technik bekannt und wird deshalb nicht im Detail erläutert.

In der hier beschriebenen Ausführungsform werden standardisierte Dienste-Schnittstellen zum Zugriff auf die bereitgestellten Dienste verwendet. In Fig. 1 sind die bereitgestellten Dienste beispielhaft als Aktor-Service AS, Sensor-Service SS und Steuereinheiten-Service CS angedeutet. Es besteht dabei die Möglichkeit, dass Dienste miteinander kombiniert und orchestriert werden, womit sich komplexe, Einheiten-übergreifende Funktionen realisieren lassen. Es werden somit mehrere Dienste zu übergeordneten Diensten zusammengefasst, wobei übergeordnete Dienste wiederum zu weiteren übergeordneten Diensten kombiniert werden können. In Fig. 1 sind als Beispiele von übergeordneten Diensten die Dienste US, MS, KS und DS angedeutet, wobei der Dienst US ein Steuerdienst, der Dienst MS einen Überwachungsdienst, der Dienst KS einen Konfigurationsdienst und der Dienst DS einen Diagnosedienst repräsentiert, wobei diese Dienste für jeweilige Automatisierungsmodule verwendet werden können. Wie bereits erwähnt, können auch diese Dienste zusammengefasst werden, was beispielhaft in Fig. 1 durch die Dienste SKS angedeutet ist, welche Steuerdienste von Teilsystemen der Anlage darstellen.

Mit der hier beschriebenen Ausführungsform einer automatisierten Anlage wird somit sowohl eine Datenvirtualisierung über ein dezentrales Peer-to-Peer-Netz DN als auch eine Ausführungsvirtualisierung über die Verwendung von Grid-Computing GC realisiert. Die Datenvirtualisierung beschreibt dabei die Entkopplung der Daten vom Speicherort der Daten. Hierdurch wird erreicht, dass auf die Daten ortsunabhängig in einem verteilten logischen Informationsraum zugegriffen werden kann. Demgegenüber entkoppelt die Ausführungsvirtualisierung einen Algorithmus bzw. eine Applikation von der konkreten Ausführungsumgebung, so dass diese nicht schon zum Zeitpunkt des Engineerings der Anlage, sondern erst zur Laufzeit festgelegt werden muss. Die Ausführung der einzelnen Applikationen wird dabei durch das Grid-Computing über einen geeigneten Scheduler festgelegt, der basierend auf entsprechend festgelegten Regeln (englisch: Policiy) spezifiziert, welche Applikationen auf bestimmten freien Ressourcen von Steuereinheiten ausgeführt werden. Vorzugsweise ist die Policy dabei derart ausgestaltet, dass die Ressourcen besonders effizient ausgenutzt werden, d.h. dass für die Durchführung einer Applikation Steuereinheiten verwendet werden, welche aktuell eine große Menge an freier Speicher- bzw. Rechenkapazität aufweisen.

Durch das oben dargelegte Konzept der Serviceorientierung werden in der hier beschriebenen Ausführungsform Funktionalitäten miteinander gekapselt und mittels standardisierter Service-Schnittstellen bereitgestellt, wobei die einzelnen Schnittstellen in den jeweiligen Komponenten der automatisierten Anlage realisiert sind. Die Komponenten der Anlage können dabei die oben beschriebenen Sensoren, Aktoren und Steuereinheiten umfassen. Ferner können die Komponenten jedoch auch weitere Komponenten beinhalten, insbesondere Rechner bzw. Terminals in dem Leitsystem der Anlage, in denen der Gesamtbetrieb der Anlage überwacht wird und welche mit den einzelnen Automatisierungsmodulen auf der Steuerebene kommunizieren. Aufgrund der Verwendung von standardisierten Service-Schnittstellen wird dabei die Austauschbarkeit von Komponenten der Anlage unterstützt und die Wiederverwendung von implementierter Software vereinfacht. Die wesentlichen Kerneigenschaften der hier beschriebenen Ausführungsform der automatisierten Anlage können wie folgt zusammengefasst werden:
- Virtualisierung des Zugriffs auf die Automatisierungsmodule durch Dienstkapselung und Organisierung der Sensor- und Aktordaten in einem Peer-to-Peer-Informationsraum;
- Verwendung von Abstraktionskonzepten aus der Anwendungsdomäne statt informationstechnischer Details während des Engineerings, z.B. Pumpen und Förderbänder anstatt von Speicheradressen und Steueralgorithmen;
- Spezifikation von Applikationen unter Verwendung abstrakter Domänenkonzepte, Sensordatenquellen und Aktordatensenken, wodurch im Engineering auf eine dezidierte Abbildung der Applikationen auf die Ausführungsumgebung verzichtet werden kann, die erst zur Laufzeit automatisch durch Grid-Computing erfolgt.

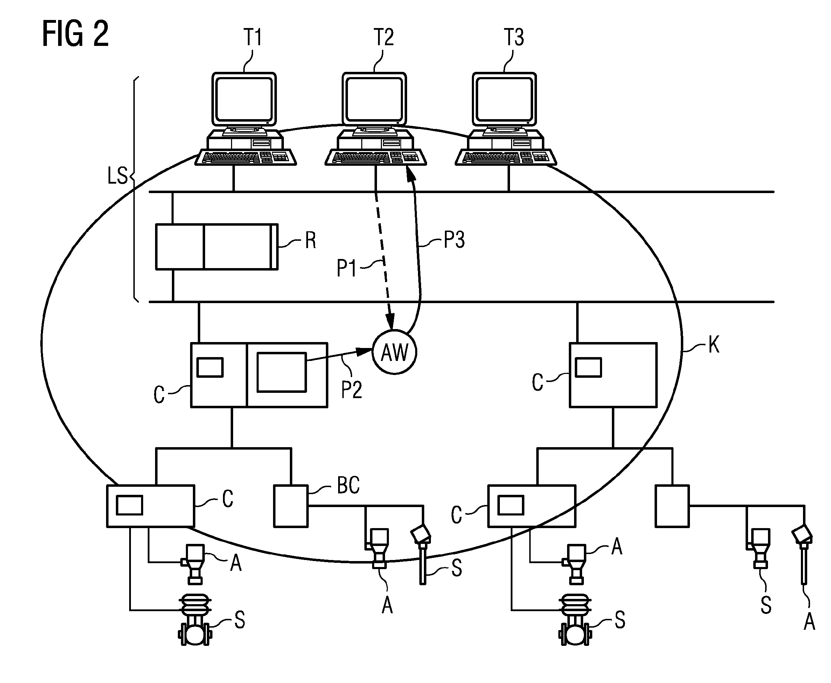

Im Vorangegangen wurde das Konzept der Erfindung im Zusammenhang mit einer automatisierten Anlage erläutert, bei der die Anlage aus Automatisierungsmodulen zusammengesetzt ist. Die Erfindung ist jedoch analog auch auf nicht modular aufgebaute automatisierte Anlagen anwendbar, bei der Aktoren, Sensoren und Steuereinheiten nicht zu Modulen zusammengefasst sind, sondern separate Einheiten bilden, welche miteinander kommunizieren. In Fig. 2 ist eine solche, nicht modular aufgebaute automatisierte Anlage gezeigt, anhand welcher beispielhaft erläutert wird, wie die Funktionalität einer Komponentenübergreifenden Applikation, an der mehrere Einheiten der Anlage beteiligt sind, über ein logisches, zwischen den Komponenten der Anlage aufgebautes Peer-to-Peer-Netz realisiert werden kann.

Fig. 2 zeigt schematisch eine automatisierte Anlage mit einer Vielzahl von Steuereinheiten C, Aktoren A und Sensoren S. Die Aktoren und Sensoren sind dabei direkt bzw. unter Zwischenschaltung entsprechender Buscontroller BC mit Steuereinheiten C verbunden. Die automatisierte Anlage umfasst ferner eine Leitstelle LS, in welcher der Betrieb der automatisierten Anlage durch entsprechendes Personal überwacht wird, wobei in der Leitstelle eine Vielzahl von Terminalrechnern T1, T2 und T3 vorgesehen sind, welche über einen weiteren Rechner R und ein Bussystem mit den Steuereinheiten und den Sensoren bzw. Aktoren gekoppelt sind. In der Ausführungsform der Fig. 2 wird ein logisches, durch den Kreis K angedeutetes Peer-to-Peer-Netz umfassend die Terminals T1 bis T3 sowie die Steuereinheiten C als Peers gebildet, wobei in der hier beschriebenen Ausführungsform dieses Netz DHT-basiert ist, d.h. jeder Peer ist gemäß einer verteilten Hashtabelle für ein Intervall von Hashwerten zuständig, wobei in an sich bekannter Weise nach Schlüsseln (auch als Schlüsselwörter bezeichnet) in dem Netz gesucht werden kann. Die Schlüssel werden dabei über eine Hash-Funktion auf Hashwerte abgebildet werden, wodurch die Zuständigkeit von Peers für entsprechend durch Schlüsselwörter spezifizierte Daten bzw. Werte festgelegt wird. In dem Peer-to-Peer-Netz läuft dabei ein geeigneter Grid-Computing-Algorithmus zur verteilten Ausführung von entsprechenden Applikationen, wobei dieser Algorithmus dadurch implementiert wird, dass auf den einzelnen Peers des Netzes eine geeignete Grid-Computing-Software installiert wird, beispielsweise die aus dem Stand der Technik bekannte UNICORE-Software.

Im Rahmen des oben erwähnten und an sich bekannten Publish-Subscribe-Mechanismus kann sich ein Peer, der über eine Publikation bzw. Veröffentlichung eines bestimmten Schlüssels benachrichtigt werden möchte, auf das entsprechende Schlüsselwort subskribieren, wodurch eine Subscriber-Ressource für dieses Schlüsselwort geschaffen wird, so dass im Falle einer Publikation des entsprechenden Schlüsselworts der subskribierende Peer über den Inhalt des Schlüsselworts informiert wird. Im Folgenden wird der Publish-Subscribe-Mechanismus basierend auf einer in das Netz der Fig. 2 eingebrachten Alarm-Funktion erläutert. Gemäß dieser Alarm-Funktion soll der Terminal T2 über den Eintritt einer Alarmbedingung informiert werden, wobei der Eintritt der Alarmbedingung durch die Publikation eines Alarmwerts AW im Netz veröffentlicht wird. Wie in Fig. 2 durch den Pfeil P1 angedeutet ist, subskribiert sich dabei eine Anwendung auf dem Terminal T2 auf das Eintreten der Alarmbedingung, d.h. auf das Schlüsselwort AW, welches dem entsprechenden Alarmwert zugeordnet ist. Jedes Mal, wenn die Alarmbedingung eintritt, publiziert nun die Alarm-funktion den Alarmwert im Informationsraum an der Speicherposition AW. Eine solche Veröffentlichung durch eine der Speichereinheiten C ist durch den Pfeil P2 in Fig. 2 angedeutet. Als Folge der Publikation werden nun alle zum Wert AW gehörenden Subskriptionen benachrichtigt und auf diese Weise auch die Anwendung auf dem Terminal T2 über den Eintritt der Alarmbedingung informiert, was durch den Pfeil P3 wiedergegeben wird.

Der im Vorangegangenen beschriebene Publish-Subscribe-Mechanismus zur Realisierung von geeigneten Funktionen in dem Peer-to-Peer-Netz der Fig. 2 ist lediglich beispielhaft und es können auch andere Mechanismen verwendet werden, mit denen Daten in dem Netz adressiert werden. Insbesondere ist die Adressierung von Daten nicht auf eine einfache Schlüsselwortsuche beschränkt, sondern es können im Informationsraum gegebenenfalls auch komplexe Anfragen verarbeitet werden, welche z.B. wie folgt lauten können:
SELECT * FROM SENSORS
   WHERE voltage > 110 kV
   WINDOW(now, forever, 10 s)

Gemäß dieser Anfrage werden alle Sensoren in dem Netz der Fig. 2 selektiert, die in den letzten 10 Sekunden einen Spannungswert von mehr als 110 kV gemessen haben. Eine detaillierte Beschreibung der soeben dargelegten Funktionsweise und Umsetzung eines Informationsraums findet sich beispielsweise in dem Dokument [3], dessen gesamter Offenbarungsgehalt durch Verweis zum Inhalt der vorliegenden Anmeldung gemacht wird.

Wie bereits erwähnt, läuft in dem Peer-to-Peer-Netz der Fig. 2 ein Grid-Computing-Verfahren, bei dem die einzelnen Steuerrechner C eine virtuelle Laufzeitumgebung bereitstellen, innerhalb derer entsprechende Kontrollalgorithmen gestartet und ausgeführt werden können, wodurch die Entkopplung zwischen Algorithmen und den sie ausführenden Einheiten erreicht wird. Auf diese Weise wird in der hier beschriebenen Ausführungsform eine Kombination der auf dem Peer-to-Peer-Netz basierten Datenvirtualisierung mit der Ausführung der Algorithmen auf beliebigen Steuereinheiten erreicht. Wie anhand von Fig. 1 dargelegt wurde, kann zur Ausführung der Dienste eine oberhalb der Daten- und Virtualisierungsschicht befindliche Serviceschicht mit einfachen und komplexen Diensten verwendet werden. Die einfachen Dienste, welche in Fig. 1 mit AS, SS und CS bezeichnet sind, kapseln den Zugriff auf Sensoren und Aktoren sowie die Verwaltung der Steuereinheiten und exportieren ihre Funktionen mittels einer definierten Schnittstelle. Darauf aufbauend existieren höhere Serviceschichten, welche die einfachen Sensor- und Aktor-Services zu komplexen Diensten, z.B. zur Konfiguration und Diagnose, kapseln.

Im Folgenden wird anhand eines weiteren Beispiels erläutert, wie in dem logischen Informationsraum eines Peer-to-Peer-Netzes über Grid-Computing Daten mit einem in dem Netz ablaufenden Algorithmus verarbeitet werden können. Dies wird basierend auf der Verarbeitung eines Messwerts eines Sensors erläutert, wobei der Sensor bzw. die dem Sensor zugeordnete Steuereinheit den Messwert zyklisch oder bei jeder Änderung in dem logischen Informationsraum unter einem zugehörigen Schlüsselwort speichert. Der Messwert wird dabei als Eingabeparameter von einem in dem Netz ablaufenden Kontrollalgorithmus verarbeitet, der basierend auf dem Messwert einen entsprechenden Steuerwert für einen Aktor berechnet. Der Kontrollalgorithmus enthält als Ein- und Ausgabeparameter entsprechende, im Peer-to-Peer-Netz verwaltete Schlüsselwörter, die bei dessen Ausführung vom Netz in die geeigneten Sensor- bzw. Aktordaten aufgelöst werden. Insbesondere stellt das Schlüsselwort des Sensormesswerts einen Eingabeparameter dar, wohingegen der Ausgabeparameter ein Schlüsselwort repräsentiert, das einen aus dem Messwert ermittelten Steuerwert eines Aktors enthält. Es können somit Eingabeparameter des Algorithmus mit den im Informationsraum gespeicherten Sensordaten instanziert und der Steuerwert des Aktors berechnet werden. Wie erwähnt, ist dieser Steuerwert dann als Ausgabewert unter einem Schlüsselwort gespeichert, das dem entsprechenden Aktor zugeordnet ist. Das Auslösen einer Aktion des Aktors nach der Berechnung eines Steuerwerts kann dabei beispielsweise wiederum über den oben erwähnten Publish-Subscribe-Mechanismus realisiert werden. Dabei hält der Aktor bzw. die zum Aktor gehörige Steuereinheit eine Subskription auf den Steuerwert, wobei der Aktor bzw. die Steuereinheit vom Peer-to-Peer-Netz über jede Änderung des Steuerwerts aufgrund der Subskription benachrichtigt wird, so dass anschließend basierend auf dem Steuerwert die entsprechende Aktion des Aktors umgesetzt werden kann.

Das soeben beschriebene Steuerungsprinzip eines Kontrollalgorithmus zur Verarbeitung von Sensordaten und Berechnung eines Steuerwerts ermöglicht die indirekte Kopplung von Sensoren und Aktoren über den Kontrollalgorithmus. Die Verbindung zwischen Sensor bzw. Aktor und Kontrollalgorithmus muss dabei zum Zeitpunkt des Engineerings der automatisierten Anlage nur logisch mittels Schlüsselwörter spezifiziert werden und wird erst während der Ausführung über den Informationsraum eines Peer-to-Peer-Netzes realisiert, was die Verteilung übergeordneter Kontrollfunktionen auf beliebige Steuereinheiten sowie das Austauschen von Sensoren und Aktoren ohne aufwändige Anpassungen möglich macht.

Ein Nachteil der indirekten Kopplung von Sensoren bzw. Aktoren mit einem Kontrollalgorithmus über einen Peer-to-Peer-Informationsraum besteht darin, dass eine solche Kopplung nur eingeschränkt echtzeitfähig ist, da die Zuordnung von logischen Adressen zu den tatsächlichen physikalischen Adressen über eine Schlüsselwortsuche erfolgt. Dieses Problem wird in einer besonders bevorzugten Variante der Erfindung dadurch gelöst, dass der Informationsraum des Peer-to-Peer-Netzes nur während der Initialisierung der Anlage dazu verwendet wird, um über logische Adressen eine dezidierte Verbindung zwischen Sensor bzw. Aktor und Steuereinheiten zu etablieren. Dabei werden über an sich bekannte Mechanismen die im Peer-to-Peer-Netz verwendeten logischen Adressen in die physikalischen Adressen aufgelöst, welche anschließend von dem Algorithmus des Grid-Computing verwendet werden. Eine Auflösung von logischen in physikalische Adressen kann dabei beispielsweise dadurch erfolgen, dass einem Peer die Funktionalität der Zuordnung von logischen zu physikalischen Adressen zugewiesen wird, so dass diese Zuordnung über Anfragen an diesen Peer aufgelöst werden kann. Der Mechanismus einer solchen Auflösung entspricht dabei im Wesentlichen der Funktionalität eines DNS-Dienstes (DNS = Domain Name System), welcher hinlänglich aus dem Stand der Technik bekannt ist.

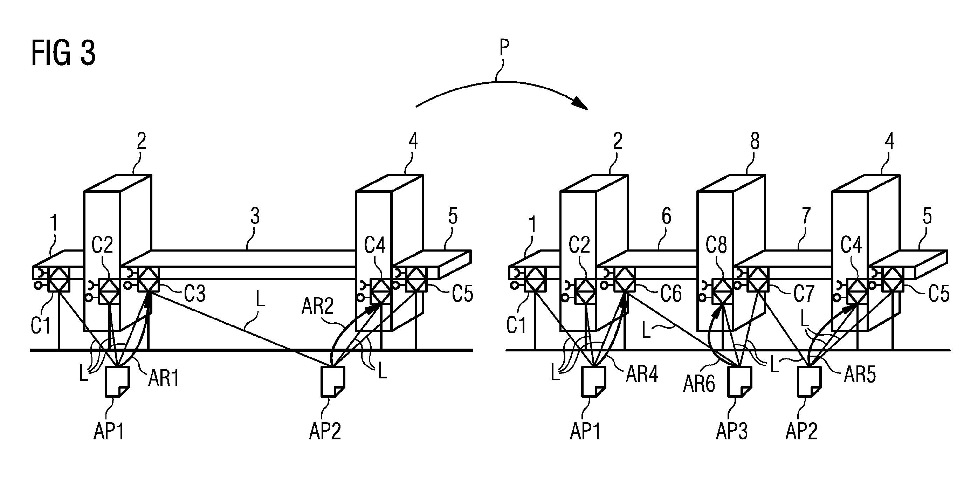

Anhand von Fig. 3 wird nachfolgend beispielhaft erläutert, wie Applikationen in der Form von übergeordneten Kontrollfunktionen basierend auf Grid-Computing auf vorhandene Steuereinheiten einer automatisierten Anlage verteilt werden können. Es wird dabei wiederum von einem modularen Aufbau der Anlage ausgegangen, bei dem sich die Anlage aus Automatisierungsmodulen zusammensetzt. Jedes Automatisierungsmodul umfasst daher neben Sensoren und/oder Aktoren eine eigene Steuereinheit zur Ausführung entsprechender Funktionen des Moduls und ist in diesem Sinne vorautomatisiert. Demzufolge muss beim Zusammenbau oder Umrüsten der automatisierten Anlage nur noch das spezifische Zusammenspiel zwischen den einzelnen Automatisierungsmodulen automatisiert werden, was bei herkömmlichen Ansätzen auf dezidierten Steuereinheiten erfolgt. Im Rahmen des erfindungsgemäßen Verfahrens kann auf solche dezidierten Steuereinheiten verzichtet werden, indem die Ausführung von übergeordneten Kontrollfunktionen stattdessen auf nur schwach ausgelastete Modul-Steuereinheiten mit Hilfe von Grid-Computing verteilt wird.

Fig. 3 zeigt schematisch eine automatisierte Anlage, wobei im linken Teil der Fig. 3 eine erste Konfiguration der Anlage und im rechten Teil der Fig. 3, der über den Pfeil P mit dem linken Teil verbunden ist, eine Umkonfiguration der Anlage wiedergegeben ist. Die ursprüngliche Anlage umfasst Automatisierungsmodule 1, 2, 3, 4, 5 mit entsprechenden Steuereinheiten C1, C2, C3, C4 bzw. C5. Die Module 1, 3 und 5 stellen dabei Förderbänder dar, wohingegen die Module 2 und 4 entsprechende Werkzeuge sind, welche über die Förderbänder transportierte Gegenstände geeignet bearbeiten. In dem linken Teil der Fig. 3 werden dabei jeweilige Applikationen AP1 und AP2 mit übergeordneten Kontrollfunktionen basierend auf Grid-Computing derart verteilt, dass die Applikation AP1 auf der Steuereinheit C3 des Förderbands 3 und die Applikation AP2 auf der Steuereinheit C4 des Werkzeugs 4 durchgeführt wird. Dies ist durch entsprechende Pfeile AR1 und AR2 angedeutet. Über Linien L wird ferner verdeutlicht, dass die Applikationen bei der Ausführung auf Daten verschiedener Steuereinheiten zugreifen.

Die Verteilung der Ausführung der Applikationen AP1 und AP2 auf die Steuereinheiten kann z.B. während des Engineerings durch einen Planungsingenieur festgelegt werden, der für das Grid-Computing eine entsprechende (statische) Policy definiert, gemäß der ein Scheduler die Ausführung von Applikationen auf Steuereinheiten festlegt. In einer bevorzugten Variante erfolgt die Zuweisung der Ausführung der Applikationen AP1 bzw. AP2 zu entsprechenden Steuereinheiten jedoch während der Laufzeit der Anlage basierend auf einem Scheduler mit einer dynamischen Policy, welche unter Verwendung von dynamischen Informationen während der Laufzeit entsprechende Steuereinheiten auswählt, auf denen übergeordnete Kontrollfunktionen ausgeführt werden sollen. Eine solche Policy kann dabei darin bestehen, dass gering ausgelastete Modul-Steuereinheiten bei der Ausführung übergeordneter Kontrollfunktionen bevorzugt werden. Gegebenenfalls besteht auch die Möglichkeit, dass die Energieeffizienz der automatisierten Anlage über solche Scheduling-Policies gesteuert wird. Durch die soeben beschriebene Kopplung von übergeordneten Kontrollfunktionen in der Form von Applikationen AP1 bzw. AP2 mit den Funktionen entsprechender Steuereinheiten in Kombination mit dem oben beschriebenen Peer-to-Peer-Netz kann somit zur Laufzeit ein Informationsraum realisiert werden, bei dem statische Punktzu-Punkt-Verbindungen aufgebrochen werden, wodurch das Engineering der Anlage signifikant vereinfacht wird und die Flexibilität der Anlage erhöht wird.

Wie bereits erwähnt, ist im rechten Teil der Fig. 3 eine Umkonfiguration der Anlage aus dem linken Teil gezeigt. Dabei werden anstatt des Förderbands 3 zwei zusätzliche Förderbänder 6 und 7 mit einem weiteren, dazwischen geschalteten Werkzeug 8 verwendet. Die beiden Förderbänder 6 und 7 werden wiederum über entsprechende Steuereinheiten C6 und C7 gesteuert. Ebenso wird das weitere Werkzeug 8 über eine zugeordnete Steuereinheit C8 gesteuert. Durch das Grid-Computing werden die neu hinzukommenden Ressourcen der Steuereinheiten C6 bis C8 im System identifiziert und gegebenenfalls zur Ausführung übergeordneter Kontrollfunktionen verwendet. In dem Beispiel der Fig. 3 werden dabei die übergeordneten Applikationen AP1 bzw. AP2 bzw. AP3 nunmehr auf den Steuereinheiten C6 bzw. C4 bzw. C8 ausgeführt, was durch entsprechende Pfeile AR4 bzw. AR5 bzw. AR6 angedeutet ist. Durch das Grid-Computing wird auf diese Weise eine einfache Umkonfiguration der Anlage ermöglicht, ohne dass manuelle Änderungen an den bereits existierenden Steuereinheiten vorgenommen werden müssen.

Das im Vorangegangenen beschriebene erfindungsgemäße Verfahren weist eine Reihe von Vorteilen auf. Insbesondere werden die Ressourcen der einzelnen Steuereinheiten in der Anlage besser genutzt und es kann auf zusätzliche Steuereinheiten zur Realisierung von übergeordneten Kontrollfunktionalitäten zwischen den Steuereinheiten verzichtet werden. Der Entwurf bzw. das Engineering der Anlage wird ferner durch die Verwendung eines logischen Informationsraums basierend auf Peer-to-Peer-Netzen vereinfacht. Dadurch ist auch eine einfachere Rekonfiguration und damit erhöhte Produktionsflexibilität der Anlage gewährleistet. Durch die Verwendung an sich bekannter Mechanismen aus Peer-to-Peer-Netzen, beispielsweise durch eine redundante Speicherung von Daten auf mehreren Peers, wird die Robustheit und Ausfallsicherheit der Anlage erhöht.

### Literaturverzeichnis

[1] The Globus Project: A Status Report, I. Foster, C. Kesselman, C. Proc. IPPS/SPDP '98, Heterogeneous Computing Workshop, Seiten 4 bis 18, 1998.
[2] The UNICORE Grid Infrastructure, M. Romberg, 2002, Scientific Programming. 10, 2 (April 2002), Seiten 149 bis 157.
[3] Declarative Resource Discovery in Distributed Automation Systems, C. Gerdes, C. Kleegrewe und J. P. Müller, Proceedings of MATHMOD 2009 - 6th Vienna International Conference on Mathematical Modelling, ISBN: 978-3-901608-34-6 (Vol 1, Abstract)/ISBN: 978-3-901608-35-3 (Vol 2, Full Paper), 2009.

## Patentansprüche

1. Verfahren zum Betrieb einer automatisierten Anlage zur industriellen Prozess- und/oder Fertigungsautomatisierung, umfassend eine Vielzahl von Steuereinheiten (C, C1, ..., C6), welche mit einer Vielzahl von Sensoren (S) und Aktoren (A) wechselwirken, wobei durch die Steuereinheiten (C, C1, ..., C6) Applikationen (AP1, AP2, AP3) umfassend Steuerungsapplikationen zur Steuerung des Anlage ausgeführt werden, wobei eine oder mehrere der Applikationen (AP1, AP2, AP3) basierend auf einem verteilten Rechenverfahren ausgeführt werden, bei dem Rechenprozesse des oder der Applikationen (AP1, AP2, AP3) auf mehrere Steuereinheiten (C, C1, ..., C6) verteilt werden.

2. Verfahren nach Anspruch 1, bei dem das verteilte Rechenverfahren ein Grid-Computing-Verfahren (GC) ist.

3. Verfahren nach Anspruch 1 oder 2, wobei mit dem Verfahren eine automatisierte Anlage umfassend miteinander wechselwirkende Automatisierungsmodule (1, 2, ..., 8) betrieben wird, wobei in jedem Automatisierungsmodul ein oder mehrere Sensoren (S) und/oder Aktoren (A) und eine Steuereinheit (C, C1, ..., C6) enthalten sind.

4. Verfahren nach Anspruch 3, bei dem das oder die Applikationen (AP1, AP2, AP3), die basierend auf dem verteilen Rechenverfahren ausgeführt werden, eine oder mehrere übergeordnete, zwischen den Automatisierungsmodulen (1, 2, ..., 8) durchgeführte Steuerungsapplikationen umfassen.

5. Verfahren nach einem der vorhergehenden Ansprüche, bei dem das oder die Applikationen (AP1, AP2, AP3), die basierend auf dem verteilen Rechenverfahren ausgeführt werden, eine oder mehrere, in der Automatisierungspyramide oberhalb der Steuerungsebene liegende Applikationen umfassen, insbesondere eine oder mehrere MES-Applikationen.

6. Verfahren nach einem der vorhergehenden Ansprüche, bei dem in der automatisierten Anlage Regeln hinterlegt sind, mit denen gemäß dem verteilten Rechenverfahren die Ausführung des oder der Applikationen (AP1, AP2, AP3) auf die Steuereinheiten (C, C1, ..., C6) verteilt wird.

7. Verfahren nach einem der vorhergehenden Ansprüche, bei dem zwischen den Steuereinheiten (C, C1, ..., C6) ein dezentrales logisches Datennetz (DN) aufgebaut wird, welches als Netzknoten zumindest die Steuereinheiten (C, C1, ..., C6) umfasst und in welchem die in der automatisierten Anlage verarbeiteten Daten in einem logischen Datenraum über logische Adressen verwaltet werden, wobei Daten in dem Informationsraum vorzugsweise redundant gespeichert werden.

8. Verfahren nach Anspruch 7, **dadurch gekennzeichnet, dass** das dezentrale Datennetz (DN) ein Peer-to-Peer-Netz ist, insbesondere ein auf einer verteilten Hash-Tabelle basierendes Peer-to-Peer-Netz.

9. Verfahren nach Anspruch 7 oder 8, bei dem eine oder mehrere der in der automatisierten Anlage ausgeführten Applikationen (AP1, AP2, AP3), insbesondere eine oder mehrere Applikationen (AP1, AP2, AP3), welche basierend auf dem verteilten Rechenverfahren ausgeführt werden, in dem logischen Datenraum durchgeführt werden, wobei vorzugsweise das oder die Applikationen zumindest teilweise einen Publish-Subscribe-Mechanismus zum Zugriff auf Daten in dem logischen Datenraum verwenden.

10. Verfahren nach einem der Ansprüche 7 bis 9, bei dem die Netzknoten des dezentralen Datennetzes (DN) neben den Steuereinheiten (C, C1, ..., C6) ferner einen oder mehrere Sensoren und/oder Aktoren und/oder weitere Komponenten der automatisierten Anlage umfassen, insbesondere einen oder mehrere Rechner (R, T1, T2, T3) einer Leitstelle (LS) der automatisierten Anlage.

11. Verfahren nach einem der Ansprüche 7 bis 10, bei dem in dem dezentralen Datennetz (DN) die logischen Adressen in physikalische Adressen aufgelöst werden, wobei von einer oder mehreren der in der automatisierten Anlage ausgeführten Applikationen (AP1, AP2, AP3), insbesondere von einer oder mehreren Applikationen (AP1, AP2, AP3), welche basierend auf dem verteilten Rechenverfahren ausgeführt werden, die physikalischen Adressen bei deren Ausführung verwendet werden.

12. Verfahren nach einem der vorhergehenden Ansprüche, bei dem die Funktionalitäten der Steuereinheiten (C, C1, ..., C6) und/oder Sensoren (S) und/oder Aktoren (A) in der automatisierten Anlage zumindest teilweise als Dienste (AS, SS, CS) mit Dienste-Schnittstellen bereitgestellt werden, wobei auf die Dienste (AS, SS, CS) im Rahmen des Betriebs der automatisierten Anlage durch eine oder mehrere der in der automatisierten Anlage ausgeführten Applikationen (AP1, AP2, AP3), insbesondere durch eine oder mehrere Applikationen (AP1, AP2, AP3), welche basierend auf dem verteilten Rechenverfahren ausgeführt werden, zugegriffen wird.

13. Verfahren nach Anspruch 12, bei dem mehrere Dienste (AS, SS, CS) zumindest teilweise zu übergeordneten Diensten (US, MS, KS, DS) gekapselt sind, wobei vorzugsweise auch übergeordnete Dienste (US, MS, KS, DS) zu weiteren übergeordneten Diensten (SKS) gekapselt sind.

14. Automatisierte Anlage zur Prozess- und/oder Fertigungsautomatisierung, umfassend eine Vielzahl von Steuereinheiten (C, C1, ..., C6), welche mit einer Vielzahl von Sensoren (S) und Aktoren (A) wechselwirken, wobei die Steuereinheiten (C, C1, ..., C6) derart ausgestaltet sind, dass sie im Betrieb der Anlage Applikationen (AP1, AP2, AP3) umfassend Steuerungsapplikationen zur Steuerung des Anlage durchführen, wobei eine oder mehrere der Applikationen (AP1, AP2, AP3) basierend auf einem verteilten Rechenverfahren ausgeführt werden, bei dem Rechenprozesse des oder der Applikationen (AP1, AP2, AP3) auf mehrere Steuereinheiten (C, C1, ..., C6) verteilt werden.

15. Automatisierte Anlage nach Anspruch 14, welche derart ausgestaltet ist, das in der Anlage ein Verfahren nach einem der Ansprüche 2 bis 13 durchführbar ist.
